(19) **Europäisches Patentamt / European Patent Office / Office européen des brevets**

(11) **EP 1 791 277 A1**

(12) **EUROPÄISCHE PATENTANMELDUNG**

(43) Veröffentlichungstag:
**30.05.2007 Patentblatt 2007/22**

(51) Int Cl.:
***H04B 17/00*** *(2006.01)*  ***H01Q 3/26*** *(2006.01)*

(21) Anmeldenummer: **05025922.5**

(22) Anmeldetag: **28.11.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **SIEMENS AKTIENGESELLSCHAFT**
**80333 München (DE)**

(72) Erfinder:
- **Hassler, Bernd, Dr.**
  **89171 Illerkirchberg (DE)**
- **Höck, Georg, Dr.**
  **89081 Ulm (DE)**

(54) **Verfahren und Anordnung zur Kalibrierung von Sendepfaden eines Antennensystems**

(57) Die Erfindung betrifft ein Verfahren und eine Anordnung zur Kalibrierung von Sendepfaden, die zur Ansteuerung von Einzelantennen eines Antennensystems verwendet werden.

In jedem Sendepfad (SP1-SP8) wird ein zugeführtes digitales Basisband Sendesignal ($\underline{S}_{BB,i}$) in ein trägerfrequentes Sendesignal ($\underline{S}_{RF,i}$) umgewandelt. Zur Kalibrierung wird ein einzelner Sendepfad ausgewählt, dessen zugeordnetes trägerfrequentes Sendesignal anteilig ausgekoppelt (KN) wird. Das anteilig ausgekoppelte Sendesignal wird über einen Empfangspfad (EP) in ein digitales Basisband Empfangssignal ($\underline{S}'_{BB,i}$) umgewandelt. Das Empfangssignal wird mit dem Sendesignal korreliert (KOR), um für den ausgewählten Sendepfad ein auf einen Referenz-Sendepfad bezogenes Amplitudenverhältnis, eine Phasendifferenz und eine Laufzeitdifferenz zu ermitteln. Zur Kalibrierung wird die Laufzeitdifferenz zur Einstellung eines Laufzeitglieds (T), das dem ausgewählten Sendepfad zugeordnet ist, verwendet. Weiter wird zur Kalibrierung das Amplitudenverhältnis und die Phasendifferenz zur Einstellung eines Multiplikators (M1-M8), der dem ausgewählten Sendepfad zugeordnet ist, verwendet.

FIG 1

$$\underline{S}_{RF,i}(t) = \underline{S}_{BB,i}(t-\tau_{TX,i}(t)) \cdot A_i(t) \cdot e^{j[\omega_c t + \varphi_i(t)]}$$
$$(i=0,...,n_{Ant})$$

EP 1 791 277 A1

**Beschreibung**

Die Erfindung betrifft ein Verfahren und eine Anordnung zur Kalibrierung von Sendepfaden, die zur Ansteuerung von Einzelantennen eines Antennensystems, insbesondere eines "Smart"-Antennensystems, vorgesehen sind.

Antennensysteme, bzw. SMART-Antennensysteme, werden eingesetzt, um eine teilnehmerspezifische bzw. teilnehmerindividuelle Formung einer Antennenabstrahlungscharakteristik vorzunehmen.

Dadurch ist es beispielsweise in einem Mobilfunksystem möglich, eine Reduzierung von so genannten "Intrazell"-Interferenzen innerhalb einer betrachteten Funkzelle zu erreichen. Durch die Strahlungsdiagrammformung ist es auch möglich, funkzellenübergreifende Interferenzen, die als "Interzell"-Interferenzen bezeichnet werden, zu reduzieren.

Ein Smart-Antennensystem beinhaltet dabei neben einer Vielzahl an Einzelantennen auch eine Vielzahl an Sendepfaden, wobei jeder Einzelantenne jeweils ein Sendepfad zur Antennen-Ansteuerung zugeordnet ist. Bei einem Smart-Antennensystem gelangt ein betrachtetes Teilnehmersignal mit jeweils unterschiedlichen Phasenlagen und Amplitudenwerten an jeweils ausgewählte Einzelantennen des Systems zur Abstrahlung. Die Einstellung der Strahlungscharakteristik sowie deren räumliche Ausrichtung werden durch Auswahl der Phasenlagen bzw. der Amplitudenwerte ermöglicht.

Prinzipiell können zwei Methoden zur Formung einer Antennencharakteristik unterscheiden werden.

Bei einer ersten Methode erfolgt eine Aufteilung eines hochfrequenten Teilnehmer-Sendesignals auf die einzelnen Antennen. Dazu wird beispielsweise eine so genannte "Butler-Matrix" verwendet, die neben der Aufteilung den einzelnen Signalkomponenten, die für die jeweiligen Einzelantennen vorgesehen sind, jeweils unterschiedliche Phasenlagen zuordnet.

Bei einer zweiten Methode wird bereits im Basisband an einem digitalen Teilnehmersignal eine Vorverarbeitung für die jeweiligen einzelnen Antennen vorgenommen. Dabei wird beispielsweise das bekannte "Switched-Beamforming" oder das "Eigen-Beamforming" angewendet.

Bei den "Beamforming"-Methoden, die eine Signalvorverarbeitung im digitalen Basisband voraussetzen, ist es bei einem Smart-Antennensystem notwendig, zwischen den Sendepfaden bekannte Phasenbeziehungen, Laufzeitbeziehungen und Amplitudenbeziehungen zu haben. Dies ist die Voraussetzung für eine genau gerichtete Strahlungsdiagrammformung.

Sind diese Beziehungen nicht im entsprechenden Umfang und Genauigkeit bekannt, wird eine gewünschte Antennencharakteristik in einer unvorhersehbaren Art und Weise verzerrt. Dies führt zu einer Verringerung der Funkzellen-Kapazität bzw. zu einer Verschlechterung der Intrazell-Interferenz.

Somit ist es notwendig, bei einem SMART-Antennensystem eine Kalibrierung der Sendepfade bzw. einen Abgleich zwischen den Sendepfaden vorzunehmen.

Bekannte Verfahren zur Kalibration verwenden dazu Vorrichtungen, mit denen vor Inbetriebnahme des SMART-Antennensystems ein Testsignal einen ausgewählten Sendepfad durchläuft. Aufgrund einer bestimmten Laufzeit des Testsignals erfolgt dann ein auf eine Referenz bezogener Laufzeitabgleich.

Derartige Kalibrationsverfahren sind jedoch nur für einen einmaligen, quasi statischen Systemabgleich verwendbar. Jedoch werden sich zeitlich ändernde Einflüsse, wie z.B. Umwelteinflüsse oder Alterungseinflüsse von Systemkomponenten, auf ein betriebenes SMART-Antennensystem nicht erfasst und können damit nicht abgeglichen werden.

Es ist daher Aufgabe der vorliegenden Erfindung, ein Verfahren und eine Anordnung zur Kalibrierung eines Antennensystems anzugeben, mit dem bei geringem zusätzlichen Aufwand und während des Betriebs ein Abgleich eines Antennensystem ermöglicht wird. Dabei soll insbesondere eine Kalibrierung eines betriebenen SMART-Antennensystems ermöglicht werden.

Diese Aufgabe wird durch die Merkmale des Patentanspruchs 1 und des Patentanspruchs 10 gelöst. Vorteilhafte Weiterbildungen sind in den jeweiligen Unteransprüchen angegeben.

Beim erfindungsgemäßen Verfahren zur Kalibrierung von Sendepfaden, die zur Ansteuerung von Einzelantennen eines Antennensystems verwendet werden, wird in jedem Sendepfad ein zugeführtes digitales Basisband-Sendesignal in ein trägerfrequentes Sendesignal umgewandelt. Zur Kalibrierung wird ein einzelner Sendepfad ausgewählt, dessen zugeordnetes trägerfrequentes Sendesignal anteilig ausgekoppelt wird.

Das anteilig ausgekoppelte Sendesignal wird über einen Empfangspfad in ein digitales Basisband-Empfangssignal umgewandelt. Das Empfangssignal wird mit dem Sendesignal korreliert, um für den ausgewählten Sendepfad ein auf einen Referenz-Sendepfad bezogenes Amplitudenverhältnis, eine Phasendifferenz und eine Laufzeitdifferenz zu ermitteln.

Bei der Kalibrierung wird die Laufzeitdifferenz zur Einstellung eines Laufzeitglieds verwendet, wobei das Laufzeitglied dem ausgewählten Sendepfad zugeordnet ist. Das Amplitudenverhältnis und die Phasendifferenz wird zur Einstellung eines Multiplikators verwendet, wobei der Multiplikator dem ausgewählten Sendepfad zugeordnet ist.

Diese Vorgehensweise wird für alle weiteren Sendepfade wiederholt, so dass in allen Sendepfaden gleiche Übertragungsverhältnisse vorliegen. Die in den Sendepfaden übermittelten Signale entsprechen sich nach erfolgter Kalibrierung in ihren Amplituden, in ihren Laufzeitwerten und in ihren Phasenwerten.

Durch die vorliegende Erfindung wird eine Kalibrierung während des Betriebs eines Antennensystems ermöglicht, so dass auch dynamische Einflüsse auf das System, wie beispielsweise Temperatur, Alterung, usw., stets abgeglichen werden können.

Die Kalibrierung erfolgt während des Betriebs und durch die Verwendung von Teilnehmersignalen ohne zusätzliche Störungen.

Durch die vorteilhafte Verwendung von Teilnehmersignalen werden keine zusätzlichen Funkübertragungsressourcen zur Durchführung der Kalibrierung gebunden bzw. benötigt.

Eine mit einem großen Aufwand verbundene Erzeugung und Testsignalen entfällt vorteilhaft.

Durch die vorliegende Erfindung wird auch während des Betriebs eine Kalibrierung ermöglicht. Durch die hochgenaue Formung und Ausrichtung der Strahlungsdiagramme werden stets optimale Übertragungsbedingungen bei minimalen Interferenzen innerhalb eines Funksystems ermöglicht.

Die Erfindung ist insbesondere für so genannte "Tower-Mounted-Radio" Anwendungen geeignet, bei denen eine Basisband-Signalverarbeitung antennennah und damit im allgemeinen exponiert an einem Sendemast erfolgt. Zur Signalverarbeitung verwendete Schaltungskomponenten sind dann starken Temperatur- und Alterungsprozessen bzw. Umwelteinflüssen ausgesetzt, die mit Hilfe der Erfindung jedoch ohne Einfluss auf das Antennensystem bleiben.

Die Erfindung ist insbesondere für eine Downlink-Kalibrierung vorteilhaft und eignet sich bevorzugt für Basisstationen, die Funkübertragungen gemäß dem Standard UMTS-FDD durchführen.

Durch die Erfindung wird auch während des Antennen-Betriebs eine optimierte Reduzierung von "Intrazell"-Interferenzen realisiert.

Nachfolgend wird die Erfindung anhand einer Zeichnung näher erläutert. Dabei zeigt:

FIG 1    als Blockschaltbild eine erfindungsgemäße Anordnung zur Kalibrierung,

FIG 2    bezogen auf FIG 1 eine Ausgestaltung eines Laufzeitakkumulators,

FIG 3    bezogen auf FIG 1 eine Ausgestaltung eines Phasenakkumulators, und

FIG 4    eine Architektur eines SMART-Antennensystems in einer prinzipiellen Darstellung.

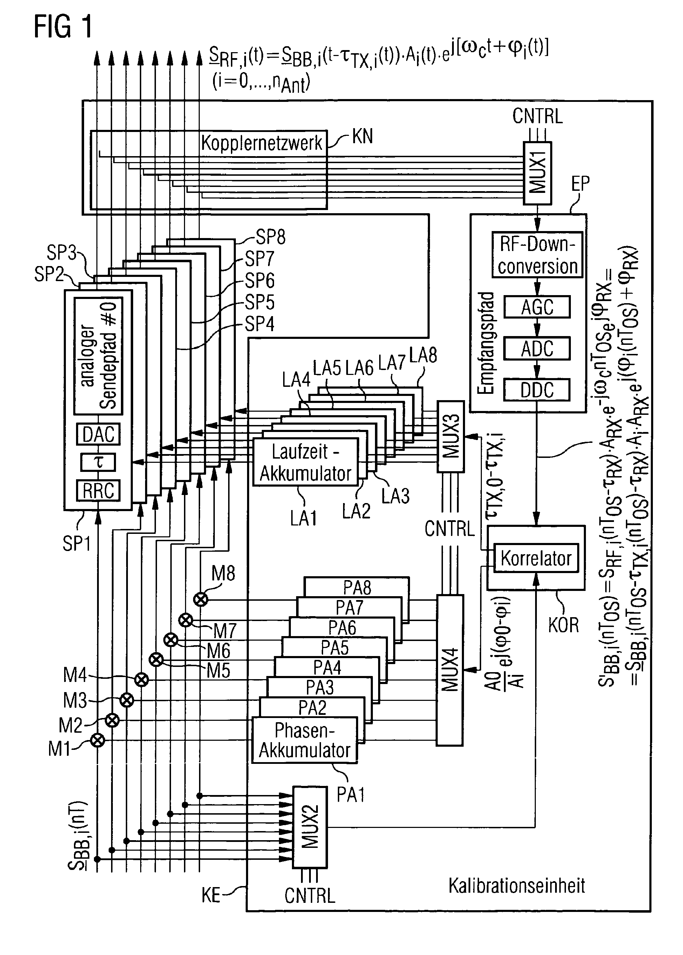

FIG 1 zeigt als Blockschaltbild eine erfindungsgemäße Anordnung zur Kalibrierung von Sendepfaden SP1 bis SP8 eines Antennensystems.

Dabei sind die Sendepfade SP1 bis SP8 des Antennensystems hinsichtlich ihrer Phasenbeziehungen, Laufzeitbeziehungen und Amplitudenbeziehungen untereinander zu kalibrieren.

Die Sendepfade SP1 bis SP8 des Antennensystems sind in einer bevorzugten Ausführungsform Teil eines SMART-Antennensystems.

Jeder einzelne der Sendepfade SP1 bis SP8 beinhaltet dabei beispielsweise ein Kanalfilter RRC, welcher beispielsweise als so genannter "Root Raised Cosine Filter" ausgebildet ist, ein einstellbares Verzögerungsglied $\tau$, einen Digital-AnalogWandler DAC und einen nachgeschalteten analogen Sendepfad.

In den Sendepfaden SP1 bis SP8 sind jedoch auch andere Konfigurationen bzw. Komponenten möglich, solange jeder einzelne Sendepfad zur Ansteuerung von zumindest einer Antenne verwendet wird.

Stellvertretend für alle anderen Sendepfade SP2 bis SP8 ist hier im ersten Sendepfad SP1 der analoge Sendepfad mit der Nummer "#1" im Detail dargestellt.

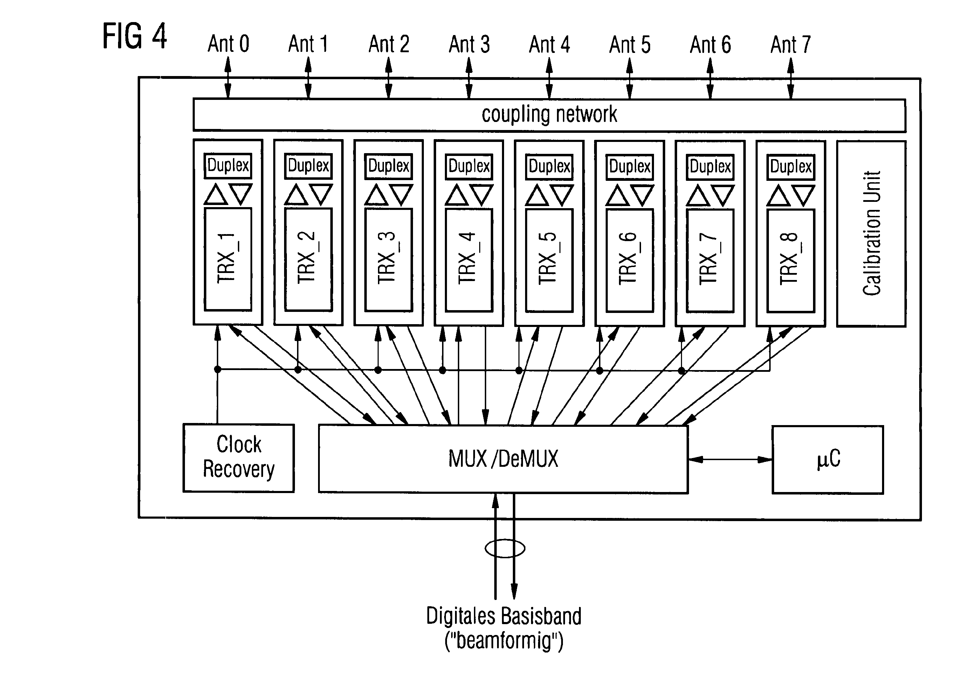

An die Sendepfade SP1 bis SP8 werden jeweilige digitale Basisbandsignale $\underline{S}_{BB,i}(nT)$ angeschaltet, die in diesem Ausführungsbeispiel in hochfrequente Sendesignale $\underline{S}_{RF,i}(t)$ umgeformt werden. Die hochfrequenten Sendesignale $\underline{S}_{RF,i}(t)$ gelangen dann, wie später in FIG 4 beschrieben, an ein hier nicht dargestelltes Smart-Antennen-System.

Jeweilige komplexe Signale werden "unterstrichen" dargestellt, wie beispielsweise die digitalen Basisbandsignale $\underline{S}_{BB,i}(nT)$.

Die Einspeisung der Basisbandsignale $\underline{S}_{BB,i}(nT)$ bzw. deren Zuordnung zu den einzelnen Sendepfaden SP1 bis SP8 erfolgt beispielsweise im Rahmen einer Ansteuerung eines SMART-AntennenSystems. Ein Beispiel für eine SMART-Antennenanordnung bzw. für ein SMART-Antennensystem ist in der später dargestellten FIG 4 gezeigt.

Jeder Sendepfad SP1 bis SP8 beinhaltet außerdem jeweils einen komplexen Multiplikator M1 bis M8, der in jedem Sendepfad den Komponenten zur Signalverarbeitung (hier beginnend mit dem Kanalfilter RRC) vorgeschaltet ist.

Mit Hilfe eines Koppler-Netzwerks KN, der einer Kalibrierungseinheit KE zugeodnet ist, werden die hochfrequenten Sendesignale $\underline{S}_{RF,i}(t)$ ausgekoppelt und einem ersten Multiplexer MUX1 zugeführt.

Mit Hilfe von Steuersignalen CNTRL, die ebenfalls dem ersten Multiplexer MUX1 zugeführt sind, wird aus den hochfrequenten Sendesignalen $\underline{S}_{RF,i}(t)$ ein Signal eines zugeordneten, betrachteten Sendepfads ausgewählt. Das jeweilige ausgewählte Signal gelangt als Eingangssignal an einen Empfangspfad EP der Kalibrierungseinheit KE.

Die hier dargestellte Realisierungsmöglichkeit des Empfangspfades EP beinhaltet eine als "RF-Down-Conversion" bezeichnete Umsetz-Einrichtung, mit der eine Umsetzung bzw. Wandlung des ausgewählten hochfrequenten Sendesignals $\underline{S}_{RF,i}$ (t) in einen Zwischenfrequenz-Bereich erfolgt.

Das in den Zwischenfrequenz-Bereich umgesetzte Signal wird über einen automatischen Regel-Verstärker AGC einem Analog-Digital-Wandler ADC zur Digitalisierung zugeführt.

Zur Umsetzung ins Basisband wird das digitalisierte Signal dann einem digitalen Abwärts-Umsetzer DDC ("Digital Down Converter) zugeführt.

Für den beschriebenen Empfangspfad sind auch alternative Empfängerarchitekturen wie beispielsweise Direct Conversion einsetzbar.

Zusammengefasst wird aus einem ausgewählten hochfrequenten Sendesignal $\underline{S}_{RF,i}$(t) eines betrachteten Signalpfads durch eine Signal-Rückwandlung ein digitales Empfangssignal $\underline{S}'_{BB,i}$($nT_{OS}$) im Basisband gebildet.

Das so gewonnene digitale Basisbandsignal steht in der Regel mit einer höheren Abtastrate ($1/T_{OS}$) als das ursprüngliche Basisbandsignal (1/T) zur Verfügung, wobei die Abkürzung "OS" für "Oversampling" steht. Dabei ist "T" ein ganzzahliges Vielfaches von "$T_{OS}$".

Dieses durch Signal-Rückwandlung gebildete Empfangssignal $\underline{S}'_{BB,i}$($nT_{OS}$) gelangt mit dem zuordenbaren Basisbandsignal $\underline{S}_{BB,i}$(nT) des betrachteten Signalpfads an einen Korrelator KOR, der die beiden durch Korrelation miteinander vergleicht. Der Korrelator KOR ist ebenfalls Bestandteil der Kalibrierungseinheit KE.

Die Auswahl des betrachteten Signalpfads bzw. die Auswahl des zugeordneten Basisbandsignals $\underline{S}_{BB,i}$ (nT) wird auch mit Hilfe eines zweiten Multiplexers MUX2 durchgeführt, der ebenfalls durch die Steuersignale CNTRL gesteuert betrieben wird.

Der Korrelator KOR führt eine komplexe Korrelation durch. Mit seiner Hilfe werden spezifische Laufzeitbeziehungen, Phasenbeziehungen und Amplitudenbeziehungen des jeweils betrachteten Sendepfads ermittelt.

Die Kalibrierungseinheit KE weist einen dritten Multiplexer MUX3 auf, der Ausgangssignale des Korrelators KOR an einen von insgesamt acht Laufzeit-Akkumulatoren LA1 bis LA8 weitermeldet. Dabei ist jedem einzelnen der Sendepfade SP1 bis SP8 jeweils einer der Laufzeit-Akkumulatoren LA1 bis LA8 zugeordnet. Durch die Laufzeitakkumulatoren LA1 bis LA8 erfolgt eine Integration von Laufzeitfehlern für den jeweils betrachteten Sendepfad.

Zum Ausgleich der Laufzeitfehler ist jeder der Laufzeit-Akkumulatoren LA1 bis LA8 mit dem einstellbaren Verzögerungsglied τ des ihm jeweils zugeordneten Sendepfads SP1 bis SP8 verbunden.

Die Kalibrierungseinheit KE weist einen vierten Multiplexer MUX4 auf, der Ausgangssignale des Korrelators KOR an einen von insgesamt acht Phasen-Akkumulatoren PA1 bis PA8 weitermeldet. Dabei ist jedem einzelnen der Sendepfade SP1 bis SP8 jeweils einer der Phasen-Akkumulatoren PA1 bis PA8 zugeordnet. Durch die Phasen-Akkumulatoren PA1 bis PA8 erfolgt eine Integration von Phasenfehlern für den jeweils betrachteten Sendepfad.

Zum Ausgleich der Phasenfehler ist jeder der Phasen-Akkumulatoren PA1 bis PA8 mit dem Multiplikator M1 bis M8 des ihm jeweils zugeordneten Sendepfads SP1 bis SP8 verbunden.

Um für alle Sendepfade SP1 bis SP8 ein identisches Übertragungsverhalten zu erreichen, ist für alle Sendepfade bzw. Antennen folgender Abgleich durchzuführen:

$$\tau_{TX,i} \; = \; \tau_{TX,0}$$

$$A_i \; = \; A_0$$

$$\varphi_i \; = \; \varphi_0$$

mit:

i    als Laufvariablen, mit i = 0 ... $n_{ant}$-1,

$n_{ant}$    als Anzahl der Sendepfade bzw. als Anzahl an Einzelantennen der in FIG 4 beispielhaft dargestellten SMART-Antenne,

$\tau_{TX,0}$    als Signallaufzeit innerhalb eines als Referenz verwendeten Sendepfads - hier des Sendepfads SP1,

$\tau_{TX,i}$    als Signallaufzeit innerhalb eines betrachteten Sendepfads,

$A_i$    als Signalamplitude innerhalb eines betrachteten Sendepfads,

$A_0$    als Signalamplitude innerhalb des Referenz-Sendepfads,

$\varphi_i$      als Signalphase innerhalb eines betrachteten Sendepfads, und mit

$\varphi_0$      als Signalphase innerhalb eines Referenz-Sendepfads.

Zur Kalibrierung wird ein betrachteter Sendepfades i mit Hilfe des ersten Multiplexers MUX1 und mit Hilfe des zweiten Multiplexers MUX2 ausgewählt.

Eine komplexe Korrelation des gesendeten Basisband-Signals $\underline{S}_{BB,i}(nT)$ mit dem ins komplexe Basisband zurücktransformierten zugehörigen Sendesignal $S'_{-BB,i}(nT_{OS})$ wird gemäß folgender Formel ausgeführt:

$$\underline{C}_i(m) = \frac{\sum_{n=0}^{N_{corr}-1} \underline{S}_{BB,i,n} \cdot \underline{S'}^{*}_{BB,i,m+T/T_{OS} \cdot n}}{\sum_{n=0}^{N_{corr}-1} \underline{S}_{BB,i,n} \cdot \underline{S}^{*}_{BB,i,n}}$$

mit:

$N_{Corr}$      als Korrelationslänge,

T      als Bitdauer,

$T_{OS}$      als Bitdauer des (im allgemeinen überabgetasteten) Empfangssignals des Kalibrationsempfängers ,

$\underline{S}_{BBi,n}$      als digitales Basisbandsignal eines betrachteten Sendepfads i,

$\underline{S'}^{*}_{BBi,m}$      als digitales, konjugiert komplexes Empfangssignal im Basisband, das durch Umsetzung des Sendesignals des i-ten Sendepfads in das Basisband gebildet wird,

$\underline{S}^{*}_{BBi,n}$      als digitales, konjugiert komplexes Basisbandsignal des betrachteten Sendepfads i, und mit

m      als Korrelationsindex.

Dabei wird angenommen, dass die Bitdauer T ein ganzzahliges Vielfaches der Bitdauer $T_{OS}$ ist.

Durch Bestimmung der Lage eines Korrelationsmaximums wird eine Gesamtlaufzeit $(\tau_{RX}+\tau_{TX,i})$ ermittelt, mit:

$\tau_{RX}$      als Signallaufzeit zwischen dem Koppler-Netzwerk KN, der zur Signalauskopplung verwendet wird, und dem Korrelator KOR und mit

$\tau_{TX,i}$      als Signallaufzeit des Sendepfads, d.h. als Signallaufzeit zwischen den Anschlusspunkten des zweiten Multiplexer MUX2 einerseits und dem Koppler-Netzwerk KN andererseits.

Dabei wird angenommen, dass sich der Wert der Signallaufzeit $\tau_{RX}$ während eines Kalibrierungsdurchgangs nur vernachlässigbar ändert, so dass sich eine auf den Referenz-Signalpfad bezogene gesuchte Laufzeitdifferenz $(\tau_{TX,0} - \tau_{TX,i})$ bestimmen lässt.

Die Laufzeitdifferenz $\tau_{TX,0} - \tau_{TX,i}$ des zugeordneten betrachteten Sendepfads i wird in einen der Laufzeitakkumulatoren LA1 bis LA8 eingespeist, dessen Ausgangssignal unmittelbar zur Korrektur der Signallaufzeit über das jeweils zugeordnete Laufzeitglied $\tau$ verwendet wird. Dabei ist jedem der Sendepfade i jeweils ein Laufzeitakkumulator zum Abgleich zugeordnet.

Jeder Laufzeitakkumulator ist als Integrator ausgebildet, so dass innerhalb des vorstehend beschriebenen Regelkreises eine gleichbleibend vorhandene Regelabweichung durch die Integration zu "Null" wird.

Somit ergeben sich identische, vom Signalpfad unabhängige Laufzeiten $\tau_{TX,i} = \tau_{TX0}$ für alle i = 0 ... $n_{ant}$-1 .

Mittels eines Koeffizienten $\alpha$, der im Bereich $0 < \alpha \leq 1$ einstellbar ist, kann eine Variation einer Regelbandbreite ermöglicht werden. Dabei entspricht $\alpha$=1 einer ungefilterten Regelung.

Am Korrelationsmaximum wird für den Signalpfad eine komplexe Amplitude unmittelbar bestimmt durch:

$$\max\left\{\underline{C}_i(m)\right\} = A_i \cdot A_{RX} \cdot e^{j(\varphi_i+\varphi_{RX})}$$

mit:

$A_i$   als Signalamplitude innerhalb des betrachteten Sendepfads,

$A_{RX}$   als Signalamplitude für den Empfangspfad bzw. für den Bereich zwischen den Auskoppelpunkten des Signals durch das Koppler-Netzwerk KN einerseits und dem Korrelator KOR andererseits,

$\varphi_i$   als Signalphase innerhalb des betrachteten Sendepfads, und mit

$\varphi_{RX}$   als Signalphase für den Empfangspfad bzw. für den Bereich zwischen den Auskoppelpunkten des Signals durch das Koppler-Netzwerk KN einerseits und dem Korrelator KOR andererseits.

Unter der Annahme, dass sich die Signalamplitude $A_{RX}$ und die Signalphase $\varphi_{RX}$ während eines Kalibrierungs-durchgangs nur vernachlässigbar ändern, folgt:

$$\frac{\max\{\underline{C}_0(m)\}}{\max\{\underline{C}_i(m)\}} = \frac{A_0}{A_i} \cdot e^{j(\varphi_0 - \varphi_i)}$$

Der Wert des berechneten Verhältnisses wird in einen der Phasen-Akkumulatoren PA1 bis PA8 eingespeist, dessen Ausgangssignal unmittelbar zur Korrektur der komplexen Amplitude über den jeweils zugeordneten Multiplikator M1 bis M8 verwendet wird. Dabei ist jedem betrachteten Sendepfad i jeweils ein komplexer Multiplikator zum Abgleich zugeordnet.

Jeder Phasen-Akkumulator PA1 bis PA8 ist als Integrator für die Phase und für die logarithmierte Amplitude innerhalb des beschriebenen Regelkreises ausgebildet. Durch die Integration entfällt vorteilhaft eine gleichbleibend vorhandene Regelabweichung innerhalb des beschriebenen Regelkreises.

Es ergeben sich näherungsweise identische, vom Signalpfad unabhängige, komplexe Übertragungsfunktionen der einzelnen Sendepfade mit $A_i = A_0$ und mit $\varphi_i = \varphi_0$ für alle Sendepfade i = 0... $n_{ant}$ -1.

Mittels eines Koeffizienten $\alpha$, der im Bereich $0 < \alpha \leq 1$ einstellbar ist, kann eine Variation einer Regelbandbreite ermöglicht werden. Dabei entspricht $\alpha = 1$ einer ungefilterten Regelung.

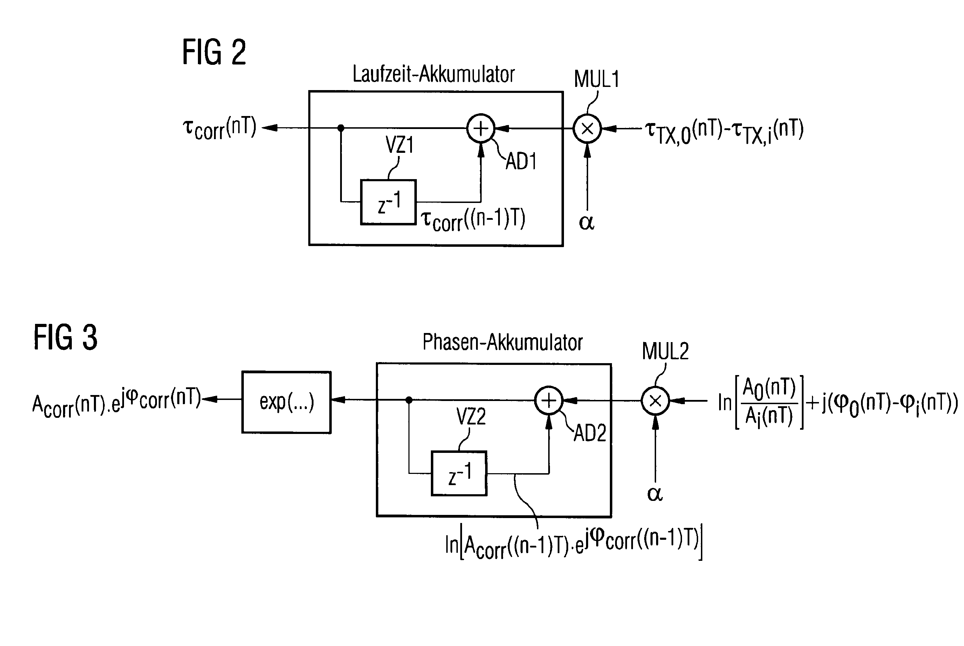

FIG 2 zeigt bezogen auf FIG 1 eine Ausgestaltung eines Laufzeit-Akkumulators.

Die gebildete Laufzeitdifferenz $\tau_{TX,0}(nT)-\tau_{TX,i}(nT)$ wird über einen Multiplikator MUL1, der zur Multiplikation mit dem Koeffizienten $\alpha$ vorgesehen ist, an einen Addierer AD1 gebracht. Der Addierer AD1 ist über ein Verzögerungsglied VZ1 zurückgekoppelt. Das Ausgangssignal des Addierers AD1 wird als Wert $\tau_{corr}(nT)$ verwendet.

Der Laufzeit-Akkumulator wird im Rahmen einer ersten und eher groben Korrektur verwendet.

FIG 3 zeigt bezogen auf FIG 1 eine Ausgestaltung eines Phasenakkumulators.

Das Verhältnis der Signalamplituden $A_0(nT)$ und $A_i(nT)$ sowie die Signalphasen $\varphi_0(nT)$ und $\varphi_i(nT)$ werden über einen Multiplikator MUL2, der zur Multiplikation mit dem Koeffizienten $\alpha$ vorgesehen ist, an einen Addierer AD2 gebracht. Der Addierer AD2 ist über ein Verzögerungsglied VZ2 zurückgekoppelt.

Das Ausgangssignal des Addierers AD2 wird nach Durchführung einer weiteren Exponentialrechnung wie folgt als Korrekturwert verwendet: $A_{corr}(nT) e^{j\varphi corr(nT)}$

Der Phasen-Akkumulator wird im Rahmen einer eher feinen Korrektur verwendet.

FIG 4 zeigt eine Architektur eines SMART-Antennensystems in einer prinzipiellen Darstellung.

Das SMART-Antennensystem weist acht Antennen ANT0 bis ANT7, acht Sende-/Empfangspfade TRX_1 bis TRX_8 mit jeweiligen Sende-/Empfangsverstärkern und mit Duplexern "Duplex", ein als "coupling network" bezeichnetes Koppelnetzwerk, ein als "calibration unit" bezeichnete Kalibrierungseinrichtung, einen als "MUX/DeMUX" bezeichneten Multiplexer bzw. Demultiplexer, eine als "Clock Recovery" bezeichnete Takteinrichtung und einen als "$\mu$C" bezeichneten Mikro-Kontroller auf.

In Senderichtung gelangen digitale Basisbandsignale über den Multiplexer an jeweilige Sende-/Empfangspfade TRX_1 bis TRX_8.

In jedem der Sende-/Empfangspfade TRX_1 bis TRX_8 erfolgt, wie in FIG 1 erläutert, durch Filterung, Digital-Analog-Wandlung und durch Verstärkung des zugeführten Basisbandsignals eine Signalumwandlung.

Mit Hilfe des Koppelnetzwerks wird ein betrachtetes Ausgangssignal eines Sende-/Empfangspfads an zumindest eine der Antennen ANT0 bis ANT7 zur Abstrahlung derart angeschaltet, dass eine Strahlungsdiagrammformung erfolgt.

Die Kalibrierungseinrichtung weist die in FIG 1 beschriebenen Komponenten zur Kalibrierung auf.

Die Takteinrichtung erzeugt bzw. regeneriert in Abhängigkeit von einem, hier nicht dargestellten, Systemtakt ein Taktsignal für die Sende-/Empfangspfade TRX_1 bis TRX_8.

Der Mikro-Kontroller $\mu$C wird zur Steuerung der Systemkomponenten verwendet.

**Patentansprüche**

1.  Verfahren zur Kalibrierung von Sendepfaden, die zur Ansteuerung von Einzelantennen eines Antennensystems verwendet werden,

    - bei dem in jedem Sendepfad ein zugeführtes digitales Basisband-Sendesignal in ein trägerfrequentes Sendesignal umgewandelt wird,
    - bei dem zur Kalibrierung ein einzelner Sendepfad ausgewählt wird, dessen zugeordnetes trägerfrequentes Sendesignal anteilig ausgekoppelt wird,
    - bei dem das anteilig ausgekoppelte Sendesignal über einen Empfangspfad in ein digitales Basisband-Empfangssignal umgewandelt wird,
    - bei dem das Empfangssignal mit dem Sendesignal korreliert wird, um für den ausgewählten Sendepfad ein auf einen Referenz-Sendepfad bezogenes Amplitudenverhältnis, eine Phasendifferenz und eine Laufzeitdifferenz zu ermitteln,
    - bei dem zur Kalibrierung die Laufzeitdifferenz zur Einstellung eines Laufzeitglieds, das dem ausgewählten Sendepfad zugeordnet ist, verwendet wird, und
    - bei dem zur Kalibrierung das Amplitudenverhältnis und die Phasendifferenz zur Einstellung eines Multiplikators, der dem ausgewählten Sendepfad zugeordnet ist, verwendet wird.

2.  Verfahren nach Anspruch 1,

    - bei dem ein Koppler-Netzwerk verwendet wird, um anteilige Sendesignale aus allen Sendepfaden auszukoppeln, und
    - bei dem ein Multiplexer zur Auswahl des Sendepfads verwendet wird, wobei der Multiplexer das anteilige Sendesignal des ausgewählten Sendepfads an den Empfangspfad weiterleitet.

3.  Verfahren nach Anspruch 1 oder 2, bei dem im Empfangspfad das anteilige Sendesignal des ausgewählten Sendepfads in das Basisband umgesetzt und analog-digital-gewandelt wird, um das digitale Basisband-Empfangssignal zu bilden.

4.  Verfahren nach einem der vorhergehenden Ansprüche, bei dem eine komplexe Korrelation des gesendeten Basisband-Signals $\underline{S}_{BB,i}$ (nT) mit dem ins komplexe Basisband zurücktransformierten zugehörigen Sendesignal $\underline{S}'_{BB,i}$ ($nT_{OS}$) gemäß folgender Formel ausgeführt wird:

$$\underline{C}_i(m) = \frac{\sum_{n=0}^{N_{corr}-1} \underline{S}_{BB,i,n} \cdot \underline{S}'^{*}_{BB,i,m+T/T_{OS} \cdot n}}{\sum_{n=0}^{N_{corr}-1} \underline{S}_{BB,i,n} \cdot \underline{S}^{*}_{BB,i,n}}$$

    mit:

    $N_{Corr}$ als Korrelationslänge,
    $T$ als Bitdauer,
    $T_{OS}$ als Bitdauer des mit einem Offset behafteten Empfangssignals, (dieses Signal liegt im Allgemeinen als überabgetastetes Signal vor),
    $\underline{S}_{BBi,n}$ als digitales Basisbandsignal eines betrachteten Sendepfads i,
    $\underline{S}'^{*}_{BBi,m}$ als digitales, konjugiert komplexes Empfangssignal im Basisband, das durch Umsetzung des Sendesignals des i-ten Sendepfads in das Basisband gebildet wird,
    $S^{*}_{BBi,n}$ als digitales, konjugiert komplexes Basisbandsignal des betrachteten Sendepfads i, und mit
    $m$ als Korrelationsindex.

5.  Verfahren nach Anspruch 4,

    - bei dem durch Bestimmung der Lage eines Korrelationsmaximums eine Gesamtlaufzeit ($\tau_{RX}+\tau_{TX,i}$) ermittelt

wird, mit:

$\tau_{RX}$ als Signallaufzeit zwischen dem Koppler-Netzwerk KN, der zur Signalauskopplung verwendet wird, und dem Korrelator KOR und mit

$\tau_{TX,i}$ als Signallaufzeit des Sendepfads, d.h. als Signallaufzeit zwischen den Anschlusspunkten des zweiten Multiplexer MUX2 einerseits und dem Koppler-Netzwerk KN andererseits, und

- bei dem eine auf einen Referenz-Signalpfad bezogene gesuchte Laufzeitdifferenz ($\tau_{TX,0}$ - $\tau_{TX,i}$) bestimmt wird.

6. Verfahren nach Anspruch 5, bei dem die Laufzeitdifferenz $\tau_{TX,0}$ - $\tau_{TX,1}$ des betrachteten Sendepfads i in einen Laufzeitakkumulator eingespeist wird, dessen Ausgangssignal unmittelbar zur Korrektur der Signallaufzeit über das Laufzeitglied verwendet wird.

7. Verfahren nach Anspruch 4, bei dem am Korrelationsmaximum für den betrachteten Signalpfad eine komplexe Amplitude unmittelbar bestimmt durch:

$$\max\left\{\underline{C}_i(m)\right\} = A_i \cdot A_{RX} \cdot e^{j(\varphi_i + \varphi_{RX})}$$

mit:

$A_i$ als Signalamplitude innerhalb des betrachteten Sendepfads,
$A_{RX}$ als Signalamplitude für den Empfangspfad bzw. für den Bereich zwischen den Auskoppelpunkten des Signals durch das Koppler-Netzwerk KN einerseits und dem Korrelator KOR andererseits,
$\varphi_i$ als Signalphase innerhalb des betrachteten Sendepfads, und mit
$\varphi_{RX}$ als Signalphase für den Empfangspfad bzw. für den Bereich zwischen den Auskoppelpunkten des Signals durch das Koppler-Netzwerk KN einerseits und dem Korrelator KOR andererseits.

8. Verfahren nach Anspruch 7,

- bei dem ein Amplitudenverhältnis und eine Phasendifferenz wie folgt berechnet wird:

$$\frac{\max\left\{\underline{C}_0(m)\right\}}{\max\left\{\underline{C}_i(m)\right\}} = \frac{A_0}{A_i} \cdot e^{j(\varphi_0 - \varphi_i)}$$

mit:

$A_0$ als Amplitudenwert des Referenz-Signalpfads,
$A_i$ als Amplitudenwert des betrachteten Signalpfads,
$\varphi_0$ als Phasenwert des Referenz-Signalpfads, und mit
$\varphi_i$ als Phasenwert des betrachteten Signalpfads,

- bei dem die Werte der berechneten Verhältnisse in einen Phasen-Akkumulator eingespeist werden, dessen Ausgangssignal unmittelbar zur Korrektur der komplexen Amplitude über den Multiplikator des Sendepfads verwendet wird.

9. Verfahren nach einem der vorhergehenden Ansprüche, bei dem die Sendepfade zur Ansteuerung von Einzelantennen eines "Smart"-Antennensystem verwendet werden.

10. Anordnung zur Kalibrierung von Sendepfaden,

- bei der die Sendepfade zur Ansteuerung von Einzelantennen eines Antennensystems vorgesehen sind
- bei der jeder Sendepfad Mittel zur Umwandlung eines zugeführten digitalen Basisband-Sendesignals in ein trägerfrequentes Sendesignal aufweist,
- bei der an jedem Sendepfad Mittel zur Auskopplung vorgesehen sind, mit dem aus dem Sendepfad dessen zugeordnetes trägerfrequentes Sendesignal anteilig ausgekoppelt wird,
- bei der das anteilig ausgekoppelte Sendesignal an einen Empfangspfad angeschaltet ist, der Mittel zur Umwandlung des Sendesignals in ein digitales Basisband-Empfangssignal aufweist,
- bei der der Empfangspfad ausgangsseitig mit einem Korrelator verbunden ist, der das Basisband-Empfangssignal mit dem Basisband-Sendesignal korreliert und aus der Korrelation ein auf einen Referenz-Sendepfad bezogenes Amplitudenverhältnis, eine Phasendifferenz und eine Laufzeitdifferenz ermittelt,
- bei der der Sendepfad ein einstellbares Laufzeitglied aufweist, an den der Korrelator ausgangseitig anschaltbar ist, wobei die Laufzeitdifferenz zur Einstellung des Laufzeitglieds verwendet wird, und
- bei der der Sendepfad einen einstellbaren Multiplikator aufweist, an den der Korrelator ausgangseitig anschaltbar ist, wobei das Amplitudenverhältnis und die Phasendifferenz zur Einstellung des Multiplikators verwendet werden.

**11.** Anordnung nach Anspruch 10,

- bei der jeder Sendepfad ausgangsseitig einen Koppler eines Koppler-Netzwerks beinhaltet, um das Sendesignal anteilig auszukoppeln, und
- bei der die Koppler des Koppler-Netzwerks mit einem Multiplexer verbunden sind, der das anteilige Sendesignal eines ausgewählten Sendepfads an einen Eingang des Empfangspfads weiterleitet.

**12.** Anordnung nach Anspruch 11 oder 12,

- bei der der Empfangspfad eine Einrichtung zur Umsetzung des trägerfrequenten Sendesignals in ein Basisbandsignal aufweist, und
- bei der der Empfangspfad einen Analog-Digital-Wandler zur Bildung des digitalen Basisband-Empfangssignals aufweist.

**13.** Anordnung nach einem der Ansprüche 10 bis 12,

- bei der der Korrelator zusätzlich eingangsseitig mit einem auswählbaren Sendepfad verbunden ist,
- bei der der Korrelator zur Durchführung einer komplexen Korrelation gemäß folgender Formel ausgebildet ist:

$$\underline{C}_i(m) = \frac{\sum_{n=0}^{N_{corr}-1} \underline{S}_{BB,i,n} \cdot \underline{S'}^{*}_{BB,i,m+T/T_{OS} \cdot n}}{\sum_{n=0}^{N_{corr}-1} \underline{S}_{BB,i,n} \cdot \underline{S}^{*}_{BB,i,n}}$$

mit:

$N_{Corr}$ als Korrelationslänge,
T als Bitdauer,
$T_{OS}$ als Bitdauer des mit einem Offset behafteten Empfangssignals, (dieses Signal liegt im Allgemeinen als überabgetastetes Signal vor),
$\underline{S}_{BBi,n}$ als digitales Basisbandsignal eines betrachteten Sendepfads i,
$\underline{S'}^{*}_{BBi,m}$ als digitales, konjugiert komplexes Empfangssignal im Basisband, das durch Umsetzung des Sendesignals des i-ten Sendepfads in das Basisband gebildet wird,
$\underline{S}^{*}_{BBi,n}$ als digitales, konjugiert komplexes Basisbandsignal des betrachteten Sendepfads i, und mit
m als Korrelationsindex,

- wobei durch Bestimmung der Lage eines Korrelationsmaximums eine Gesamtlaufzeit ($\tau_{RX.}+\tau_{TX,i}$) ermittelt wird, mit:

$\tau_{RX}$ als Signallaufzeit zwischen dem Koppler-Netzwerk KN, der zur Signalauskopplung verwendet wird, und dem Korrelator KOR, und mit

$\tau_{TX,i}$ als Signallaufzeit des Sendepfads, d.h. als Signallaufzeit zwischen den Anschlusspunkten des zweiten Multiplexer MUX2 einerseits und dem Koppler-Netzwerk KN andererseits, und

- wobei eine auf einen Referenz-Signalpfad bezogene Laufzeitdifferenz ($\tau_{TX,0} - \tau_{TX,i}$) bestimmt wird.

**14.** Anordnung nach Anspruch 13, bei der der Korrelator ausgangsseitig über einen Laufzeitakkumulator an das Laufzeitglied des betrachteten Sendepfads i anschaltbar ist, wobei der Laufzeitakkumulator aus der ihm zugeführten Laufzeitdifferenz $\tau_{TX,0} - \tau_{TX,i}$ ein Steuersignal zur Einstellung des Laufzeitglieds bildet.

**15.** Anordnung nach Anspruch 13, bei der der Korrelator zur Bestimmung eines Korrelationsmaximum für den betrachteten Signalpfad und einer komplexe Amplitude gemäß folgender Formel ausgebildet ist:

$$\max\{\underline{C}_i(m)\} = A_i \cdot A_{RX} \cdot e^{j(\varphi_i + \varphi_{RX})}$$

mit:

$A_i$ als Signalamplitude innerhalb des betrachteten Sendepfads,
$A_{RX}$ als Signalamplitude für den Empfangspfad bzw. für den Bereich zwischen den Auskoppelpunkten des Signals durch das Koppler-Netzwerk KN einerseits und dem Korrelator KOR andererseits,
$\varphi_i$ als Signalphase innerhalb des betrachteten Sendepfads, und mit
$\varphi_{RX}$ als Signalphase für den Empfangspfad bzw. für den Bereich zwischen den Auskoppelpunkten des Signals durch das Koppler-Netzwerk KN einerseits und dem Korrelator KOR andererseits,
- wobei ein Amplituden- und ein Phasenverhältnis wie folgt berechnet wird:

$$\frac{\max\{\underline{C}_0(m)\}}{\max\{\underline{C}_i(m)\}} = \frac{A_0}{A_i} \cdot e^{j(\varphi_0 - \varphi_i)}$$

mit:

$A_0$ als Amplitudenwert des Referenz-Signalpfads,
$A_i$ als Amplitudenwert des betrachteten Signalpfads,
$\varphi_0$ als Phasenwert des Referenz-Signalpfads, und mit
$\varphi_i$ als Phasenwert des betrachteten Signalpfads.

**16.** Anordnung nach Anspruch 15, bei der der Korrelator ausgangsseitig über einen Phasenakkumulator an den Multiplikator des betrachteten Sendepfads i anschaltbar ist, wobei der Phasenakkumulator aus den ihm zugeführten Amplitudenverhältnis und der Phasendifferenz ein Steuersignal zur Einstellung des Multiplikators bildet.

**17.** Anordnung nach einem Ansprüche 10 bis 16, bei der das Antennensystem als "Smart"-Antennensystem ausgebildet ist, wobei die Sendepfade zur Anspeisung der Einzelantennen des Antennensystems vorgesehen sind.

**18.** Anordnung nach einem Ansprüche 10 bis 16, bei der der Phasen- und/oder der Laufzeitakkumulator als Integrator ausgebildet ist.

# FIG 1

$$\underline{S}_{RF,i}(t) = \underline{S}_{BB,i}(t - \tau_{TX,i}(t)) \cdot A_i(t) \cdot e^{j[\omega_c t + \varphi_i(t)]}$$
$$(i = 0, \dots, n_{Ant})$$

Kopplernetzwerk — KN

CNTRL

MUX1

EP

RF-Down-conversion

AGC

ADC

DDC

Empfangspfad

SP8
SP7
SP6
SP5
SP4
SP3
SP2

analoger Sendepfad #0

DAC
$\tau$
RRC

SP1

LA4 LA5 LA6 LA7 LA8

Laufzeit-Akkumulator

LA1 LA2 LA3

MUX3

CNTRL

$\tau_{TX,0} - \tau_{TX,i}$

Korrelator

KOR

$\frac{A_0}{A_i} e^{j(\varphi_0 - \varphi_i)}$

M8
M7
M6
M5
M4
M3
M2
M1

PA8
PA7
PA6
PA5
PA4
PA3
PA2

Phasen-Akkumulator

PA1

MUX4

$\underline{S}_{BB,i}(nT)$

MUX2

KE

CNTRL

Kalibrationseinheit

$$\underline{S}'_{BB,i}(nT_{OS}) = \underline{S}_{RF,i}(nT_{OS} - \tau_{RX}) \cdot A_{RX} \cdot e^{-j\omega_c nT_{OS}} e^{j\varphi_{RX}} =$$
$$= \underline{S}_{BB,i}(nT_{OS} - \tau_{TX,i}(nT_{OS}) - \tau_{RX}) \cdot A_i \cdot A_{RX} \cdot e^{j(\varphi_i(nT_{OS}) + \varphi_{RX})}$$

## FIG 2

$$\tau_{TX,0}(nT) - \tau_{TX,i}(nT)$$

MUL1 $\times$ $\alpha$

Laufzeit-Akkumulator

AD1 $+$

VZ1 $z^{-1}$

$\tau_{corr}((n-1)T)$

$\tau_{corr}(nT)$

## FIG 3

$$\ln\left[\frac{A_0(nT)}{A_i(nT)}\right] + j(\varphi_0(nT) - \varphi_i(nT))$$

MUL2 $\times$ $\alpha$

Phasen-Akkumulator

AD2 $+$

VZ22 $z^{-1}$

$\ln\left[A_{corr}((n-1)T) \cdot e^{j\varphi_{corr}((n-1)T)}\right]$

$\exp(...)$

$A_{corr}(nT) \cdot e^{j\varphi_{corr}(nT)}$

FIG 4

Ant 0 Ant 1 Ant 2 Ant 3 Ant 4 Ant 5 Ant 6 Ant 7

coupling network

| Duplex | Duplex | Duplex | Duplex | Duplex | Duplex | Duplex | Duplex |

TRX_1 TRX_2 TRX_3 TRX_4 TRX_5 TRX_6 TRX_7 TRX_8

Calibration Unit

Clock Recovery

MUX /DeMUX

µC

Digitales Basisband ("beamformig")

EP 1 791 277 A1

EP 1 791 277 A1

**Europäisches Patentamt**

**EUROPÄISCHER RECHERCHENBERICHT**

Nummer der Anmeldung

EP 05 02 5922

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | NISHIMORI K ET AL: "A new calibration method of adaptive array for TDD systems" ANTENNAS AND PROPAGATION SOCIETY, 1999. IEEE INTERNATIONAL SYMPOSIUM 1999 ORLANDO, FL, USA 11-16 JULY 1999, PISCATAWAY, NJ, USA,IEEE, US, Bd. 2, 11. Juli 1999 (1999-07-11), Seiten 1444-1447, XP010348407 ISBN: 0-7803-5639-X * Seite 1444, Absätze 1,2 * * Seite 1445, Absatz 2 - Seite 1446, Absatz 3; Abbildung 3(b) * ----- | 1-6, 9-14,17, 18 | INV. H04B17/00 H01Q3/26 |
| Y | EP 1 003 310 A (MATSUSHITA ELECTRIC INDUSTRIAL CO., LTD) 24. Mai 2000 (2000-05-24) * Absatz [0023] * * Absatz [0097] - Absatz [0106]; Abbildungen 12-15 * * Absatz [0118] * * Absatz [0122] - Absatz [0125] * ----- | 1-6, 9-14,17, 18 | |
| A | EP 1 178 562 A (TELEFONAKTIEBOLAGET L M ERICSSON) 6. Februar 2002 (2002-02-06) * Absatz [0001] * * Absatz [0018] * * Absatz [0029] * * Absatz [0068] - Absatz [0078]; Abbildung 6 * ----- | 1-18 | RECHERCHIERTE SACHGEBIETE (IPC) H04B H01Q |
| A | EP 1 227 542 A (FUJITSU LIMITED) 31. Juli 2002 (2002-07-31) * Absatz [0026] - Absatz [0032]; Abbildung 1 * * Absatz [0040] - Absatz [0048]; Abbildung 2 * ----- -/-- | 1-18 | |

Der vorliegende Recherchenbericht wurde für alle Patentansprüche erstellt

| Recherchenort | Abschlußdatum der Recherche | Prüfer |
|---|---|---|
| Den Haag | 27. April 2006 | Sieben, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

**Europäisches
Patentamt**

# EUROPÄISCHER RECHERCHENBERICHT

Nummer der Anmeldung

EP 05 02 5922

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 97/00543 A (WATKINS-JOHNSON COMPANY; THE BOARD OF TRUSTEES OF THE LELAND STANFORD) 3. Januar 1997 (1997-01-03) * Seite 33, Zeile 17 - Seite 39, Zeile 19; Abbildungen 6,8 * ----- | 1-18 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 27. April 2006 | Sieben, S |

EPO FORM 1503 03.82 (P04C03)

# EP 1 791 277 A1

**ANHANG ZUM EUROPÄISCHEN RECHERCHENBERICHT**
**ÜBER DIE EUROPÄISCHE PATENTANMELDUNG NR.**                     EP 05 02 5922

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-04-2006

| Im Recherchenbericht angeführtes Patentdokument | Datum der Veröffentlichung | Mitglied(er) der Patentfamilie | Datum der Veröffentlichung |
|---|---|---|---|
| EP 1003310 A | 24-05-2000 | AU 4288999 A | 05-01-2000 |
| | | CN 1273729 A | 15-11-2000 |
| | | WO 9966685 A1 | 23-12-1999 |
| | | JP 3519276 B2 | 12-04-2004 |
| | | JP 2000013454 A | 14-01-2000 |
| | | US 6708020 B1 | 16-03-2004 |
| EP 1178562 A | 06-02-2002 | KEINE | |
| EP 1227542 A | 31-07-2002 | CN 1373915 A | 09-10-2002 |
| | | WO 0131745 A1 | 03-05-2001 |
| | | US 2002123372 A1 | 05-09-2002 |
| WO 9700543 A | 03-01-1997 | AU 6034796 A | 15-01-1997 |
| | | EP 0832509 A1 | 01-04-1998 |

EPO FORM P0461

Für nähere Einzelheiten zu diesem Anhang : siehe Amtsblatt des Europäischen Patentamts, Nr.12/82